# FASCICULE DE BREVET EUROPEEN

(11) **EP 3 578 884 B1**
(45) Date de publication et mention de la délivrance du brevet: **05.08.2020**
(21) Numéro de dépôt: 19178425.5
(22) Date de dépôt: 05.06.2019
(51) Int. Cl.: F23R 3/10, F23R 3/28

(54) **CHAMBRE DE COMBUSTION POUR UNE TURBOMACHINE**
VERBRENNUNGSKAMMER FÜR EINE TURBOMASCHINE
COMBUSTION CHAMBER FOR A TURBOMACHINE

(30) Priorité: 07.06.2018 FR 1854962
(43) Date de publication de la demande: 11.12.2019
(73) Titulaire: SAFRAN AIRCRAFT ENGINES, 75015 Paris (FR)
(72) Inventeur: GUEZEL, Yvan, Yoann, 77550 MOISSY CRAMAYEL CEDEX (FR); CHAPELLE, François, Xavier, 77550 MOISSY-CRAMAYEL (FR); LUNEL, Romain, Nicolas, 77550 MOISSY CRAMAYEL CEDEX (FR)
(74) Mandataire: Ernest Gutmann - Yves Plasseraud S.A.S.

(56) Documents cités:
- EP-A2- 0 724 119
- FR-A1- 2 928 994
- US-A1- 2003 061 815

## Description

### DOMAINE

La présente invention concerne une chambre de combustion pour une turbomachine, telle par exemple qu'un turboréacteur ou un turbopropulseur d'avion.

### CONTEXTE

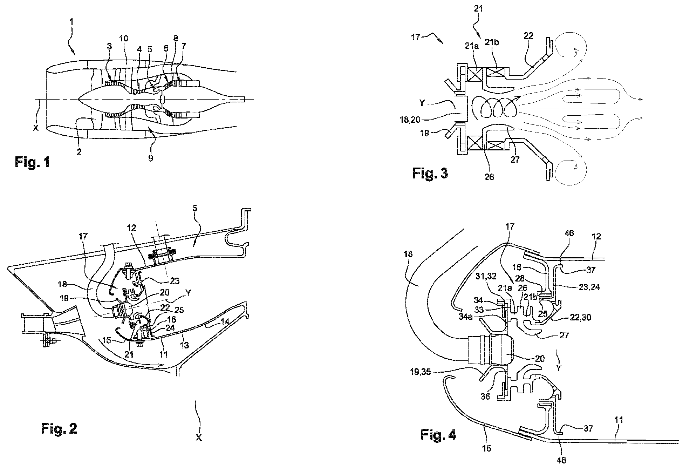

La figure 1 représente une turbomachine 1 de l'art antérieur, en particulier un turboréacteur à double flux.

Le flux d'air ou de gaz circulant au travers de la turbomachine 1 est dirigé de l'amont vers l'aval, c'est-à-dire de gauche à droite à la figure 1.

La turbomachine, d'axe X, comporte classiquement une soufflante 2 en aval de laquelle s'étend :
- une veine primaire dans laquelle s'écoule un flux primaire, ladite veine primaire traversant notamment, dans le sens d'écoulement du flux primaire, un compresseur basse-pression 3, un compresseur haute-pression 4, une chambre de combustion 5, une turbine haute-pression 6 et une turbine basse-pression 7, la veine primaire étant délimitée extérieurement au niveau de la turbine par un carter 8,
- une veine secondaire référencée 9, dans laquelle s'écoule un flux secondaire distinct du flux primaire.

La veine secondaire 9 est entourée par une nacelle 10 formant un carénage pour la turbomachine 1.

La figure 2 représente la chambre de combustion 5 de la turbomachine 1 de la figure 1. La chambre de combustion 5 est annulaire et comporte une virole annulaire radialement interne 11 et une virole annulaire radialement externe 12, lesdites viroles 11, 12 étant coaxiales et d'axe X. Les viroles 11, 12 comportent classiquement des trous 13 permettant le passage d'air dit primaire et des trous 14 permettant le passage d'air dit de dilution.

Des carénages 15 sont montés sur les extrémités amont des viroles 11, 12.

Les viroles 11, 12 sont reliées à leur extrémité amont par une paroi annulaire de fond de chambre 16 équipée de systèmes d'injection d'air et de carburant 17, régulièrement répartis autour de l'axe X et logés en partie dans le volume délimité par les carénages 15.

Comme cela est mieux visible à la figure 3, chaque système d'injection d'air et de carburant 17 comporte une canne d'injection de carburant 18, une douille 19 montée autour de l'extrémité ou nez 20 de la canne, un dispositif annulaire d'admission ou d'injection d'air 21, un bol mélangeur ou bol de vaporisation 22 et un déflecteur 23. Le dispositif d'injection d'air 21 et le bol 22 peuvent être formés d'une seule pièce ou au contraire être formés de deux pièces distinctes.

Dans la suite de la description, les termes axial, radial et circonférentiel sont définis par rapport à un axe Y dit d'injection, correspondant à l'axe de la douille et du dispositif.

Le dispositif 21 forme ici deux vrilles d'injection d'air 21a, 21b, également dénommées « swirlers », en anglais. Les vrilles 21a, 21b sont séparées l'une de l'autre par une paroi annulaire 26 qui se prolonge radialement vers l'intérieur pour former une paroi annulaire interne de déflection 27, également dénommée venturi, ayant un profil interne de forme convergente puis divergente, de l'amont vers l'aval.

Chaque vrille 21a, 21b comporte classiquement une rangée annulaire d'ailettes inclinées de manière à mettre en rotation l'écoulement d'air et améliorer ainsi l'atomisation ou la vaporisation du jet de carburant provenant du nez 20 de la canne d'injection de carburant 18. En particulier, une partie de ce carburant ruisselle sous forme liquide sur la surface interne du venturi 27 et est cisaillée par l'air tourbillonnant au niveau de l'extrémité aval du venturi (représenté schématiquement sous la forme de flèches à la figure 3).

La vaporisation du carburant et le mélange d'air et de carburant se poursuivent, en aval des vrilles 21a, 21b, dans le bol 22 puis dans la partie amont de la chambre de combustion 5, où le pré-mélange d'air et de carburant issu du bol 22 est encore mélangé avec de l'air issu des trous primaire 13 et des trous de dilution 14.

Le dispositif 21 est monté dans le déflecteur 23, lui-même monté partiellement dans une ouverture du fond de chambre 16. Le déflecteur 23 comporte une partie annulaire s'étendant radialement 24 autour de l'ouverture et située en aval du fond de chambre 16 de manière à former une barrière thermique permettant d'éviter la dégradation prématurée du fond de chambre.

Le déflecteur comporte en particulier une partie cylindrique 25 fixée par brasage au bord de l'ouverture du fond de chambre 16, la partie annulaire radiale 24 s'étendant depuis l'extrémité aval de la partie cylindrique 25.

Le déflecteur 23 est soumis à des contraintes thermiques importantes en fonctionnement, pouvant générer des criques ou des fissures au niveau de la zone de brasage avec le fond de chambre 16 et/ou au niveau de la base de la partie annulaire radiale 24, c'est-à-dire au niveau de la liaison entre la partie cylindrique 25 et la partie annulaire radiale 24.

Par ailleurs, la structure du système d'injection d'air 17 est relativement complexe et présente un encombrement axial important, en particulier au niveau de la fixation entre le déflecteur 23 et le bol 22.

Les documents US 2003/061815, EP 0 724 119 et FR 2 928 994 divulguent de telles chambres de combustion pour turbomachines.

### RESUME DE L'INVENTION

L'invention a notamment pour but d'apporter une solution simple, efficace et économique à ces problèmes.

A cet effet, l'invention concerne une chambre de combustion pour une turbomachine comportant une paroi de fond, au moins un bol mélangeur destiné à favoriser le mélange d'air et de carburant, monté dans une ouverture de la paroi de fond, au moins un déflecteur annulaire monté axialement en aval de la paroi de fond, par rapport au sens de circulation des gaz au sein de la chambre de combustion, autour de ladite ouverture, le déflecteur venant de matière avec le bol mélangeur de manière à former un ensemble monobloc, dans laquelle ledit ensemble comporte au moins un canal destiné à l'écoulement d'air de refroidissement, ledit canal comportant une entrée d'air située en amont de la paroi de fond et une sortie d'air située en aval de la paroi de fond, ladite sortie d'air étant située radialement en regard du déflecteur.

Comme indiqué précédemment, les termes axiaux, radiaux et circonférentiels sont définis par rapport à l'axe de l'ouverture, qui est globalement confondu avec l'axe de l'ensemble précité.

Le fait de réaliser le déflecteur et le bol mélangeur en seule pièce permet de réduire l'encombrement axial de l'ensemble. Le bol mélangeur est également appelé bol de vaporisation ou bol de pré-mélange. Comme cela est connu en soi, le bol peut comporter une paroi annulaire tronconique s'évasant vers l'aval.

Par ailleurs, la formation d'un canal débouchant en regard du déflecteur permet d'améliorer son refroidissement et permet également de refroidir la zone de l'ensemble dans laquelle est formé le canal. On réduit donc les risques d'apparition de criques et de fissures dans ces zones.

Ledit ensemble comporte une partie cylindrique de fixation, fixée au fond de chambre et montée radialement à l'intérieur de l'ouverture, le déflecteur comportant une partie de base radialement interne reliée à ladite partie de fixation, le canal étant ménagé dans la partie cylindrique de fixation, la sortie d'air du canal étant située radialement en regard de la base du déflecteur.

L'air issu du canal vient alors impacter plus spécifiquement la base du déflecteur, qui est l'une des zones dans lesquelles l'apparition de criques ou de fissures a été constatée dans l'art antérieur. On réduit donc spécifiquement les risques de dégradation dans cette zone.

La chambre de combustion peut comporter au moins une vrille d'admission d'air apte à générer un écoulement d'air rotatif, située en amont du bol mélangeur.

Comme indiqué précédemment, une telle vrille permet d'atomiser ou de vaporiser le carburant, de façon à réaliser un pré-mélange homogène d'air et de carburant.

La partie de fixation peut s'étendre axialement vers l'amont depuis la périphérie radialement externe du bol mélangeur, le déflecteur s'étendant radialement vers l'extérieur depuis la périphérie radialement externe du bol mélangeur.

La périphérie radialement externe du déflecteur peut comporter un rebord s'étendant vers l'aval, situé à proximité de ladite virole correspondante et décalé radialement de ladite virole.

De cette manière, l'air de refroidissement débouchant dans l'espace ménagé axialement entre le fond de chambre et la partie annulaire radiale du déflecteur peut déboucher dans la chambre de combustion par les espaces ménagés entre les rebords des déflecteurs et les viroles concernées. Cet air de refroidissement débouchant dans la chambre forme alors des films d'air venant lécher, refroidir et protéger les viroles correspondantes.

L'ensemble peut comporter une pluralité de canaux destinés à l'écoulement d'air de refroidissement, régulièrement répartis sur la circonférence.

La section de chaque canal peut être sensiblement constante de l'extrémité amont dudit canal vers l'extrémité aval dudit canal.

La section de chaque canal peut diminuer axialement de l'amont vers l'aval.

Une telle caractéristique permet d'augmenter la vitesse du flux d'air de refroidissement venant impacter le déflecteur en sortie du canal, ce qui peut permettre d'améliorer le refroidissement de la zone concernée du déflecteur.

L'au moins un canal destiné à l'écoulement d'air de refroidissement peut être délimité par une surface radialement interne et une surface radialement externe, en forme de portion de cylindres ou de portions de cônes, lesdites surfaces radialement interne et externe étant coaxiales.

Deux canaux adjacents peuvent être séparés circonférentiellement par une paroi de liaison, ladite paroi de liaison comportant une extrémité amont et une extrémité aval, ladite extrémité amont étant arrondie.

La partie cylindrique de fixation de l'ensemble peut être fixée par brasage ou soudage à une partie cylindrique de la paroi de fond, formée en périphérie radialement externe de l'ouverture.

La partie cylindrique de la paroi de fond peut comporter un épaulement amont, l'extrémité amont de la partie cylindrique de l'ensemble étant apte à venir en butée sur ledit épaulement. L'extrémité amont de la partie cylindrique de l'ensemble peut être fixée par brasage ou soudage audit épaulement.

L'ensemble peut être réalisé en un superalliage à base de nickel et/ou de cobalt. L'ensemble peut être réalisé par un procédé de fabrication additive, par exemple par fusion sélective ou par frittage sélective de poudre, à l'aide d'un faisceau d'électrons ou d'un faisceau laser.

L'invention concerne également une turbomachine comportant une chambre de combustion du type précité.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique et en coupe axiale d'une turbomachine de l'art antérieur ;
- la figure 2 est une vue en coupe axiale illustrant une chambre de combustion de la turbomachine de la figure 1 ;
- la figure 3 est une vue schématique d'un système d'injection équipant la chambre de combustion de la figure 2 ;
- la figure 4 est une vue en coupe axiale d'une partie d'une chambre de combustion selon une forme de réalisation de l'invention ;
- la figure 5 est une vue en perspective illustrant une partie du fond de chambre et une partie de l'ensemble formant notamment le déflecteur et le bol mélangeur, conformément à l'invention ;
- la figure 6 est une vue de détail de la figure 4 ;
- la figure 7 est une vue de détail de la figure 5.

### DESCRIPTION DETAILLEE

Une chambre de combustion 5 selon une forme de réalisation est illustrée aux figures 4 à 7. Celle-ci comporte une virole annulaire radialement interne 11 et une virole annulaire radialement externe 12, par rapport à l'axe X de la turbomachine, lesdites viroles 11, 12 étant coaxiales.

Des carénages annulaires 15 sont montés au niveau des extrémités amont des viroles 11, 12 et délimitent un volume annulaire.

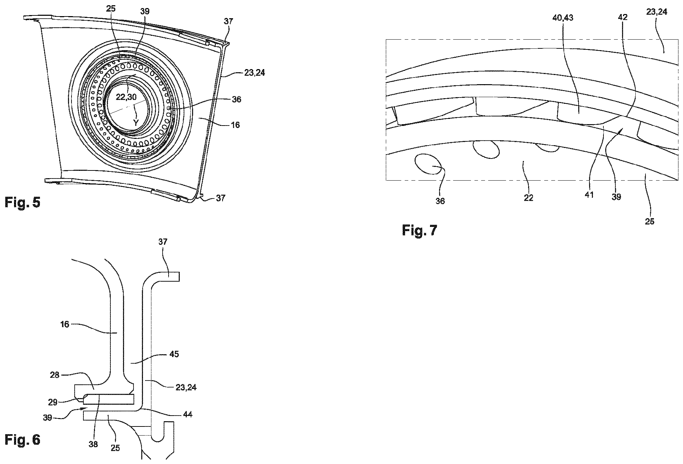

Les viroles 11, 12 sont reliées à leur extrémité amont par une paroi annulaire radiale de fond de chambre 16. Le fond de chambre 16 comporte des ouvertures d'axe Y, régulièrement réparties sur la circonférence. En particulier, le bord de chaque ouverture est délimité par une partie cylindrique de fixation 28. La partie cylindrique 28 comporte un épaulement 29 à son extrémité amont (figure 6).

Un ensemble 30 formant à la fois un bol mélangeur 22 et un déflecteur 23 assurant la protection du fond de chambre 16, est monté et fixé dans chaque ouverture du fond de chambre 16.

Un dispositif d'admission ou d'injection d'air 21 est monté en amont de l'ensemble 30.

Le dispositif 21 est annulaire d'axe Y et comporte, de l'amont vers l'aval, une partie 31 servant au montage d'une douille 19, une vrille amont d'admission ou d'injection d'air 21a et une vrille aval d'amission ou d'injection d'air 21b.

La partie amont 31 du dispositif 21 comporte une partie cylindrique 32 et une partie radiale 33, une rondelle 34 étant fixée dans la partie cylindrique 32. La rondelle 34 est décalée axialement de la partie radiale 33 de manière à former une gorge servant au montage d'une collerette 34a de la douille 19. La douille 19 comporte en outre une partie tronconique 35 entourant le nez 20 d'une canne 18 d'injection de carburant. L'injection de carburant est réalisée selon l'axe Y.

Les vrilles 21a, 21b sont séparées l'une de l'autre par une paroi annulaire 26 qui se prolonge radialement vers l'intérieur pour former une paroi annulaire interne de déflection 27, également dénommée venturi, ayant un profil interne de forme convergente puis divergente, de l'amont vers l'aval.

Chaque vrille 21a, 21b comporte classiquement une rangée annulaire d'ailettes inclinées de manière à mettre en rotation l'écoulement d'air et améliorer ainsi l'atomisation ou la vaporisation du jet de carburant provenant du nez 20 de la canne 18 d'injection de carburant. En particulier, une partie de ce carburant ruisselle sous forme liquide sur la surface interne du venturi 27 et est cisaillée par l'air tourbillonnant au niveau de l'extrémité aval du venturi 27.

Le bol 22 est formé par une paroi annulaire tronconique s'évasant vers l'aval. Ladite paroi tronconique comporte des trous 36 (figures 4 et 5) permettant le passage d'air de refroidissement issu du volume interne délimité par les carénages 15 vers la chambre de combustion 5.

Le déflecteur 23 est formé au niveau de la périphérie aval radialement externe du bol 22. En particulier le déflecteur 23 comporte une partie axiale cylindrique 25 s'étendant vers l'amont depuis la périphérie externe du bol 22 et une partie 24 s'étendant radialement vers l'extérieur depuis l'extrémité aval de la partie cylindrique 25. Les périphéries de la partie radiale 24 sont prolongées par des rebords 37 s'étendant vers l'amont et écartés radialement des viroles correspondantes.

La partie cylindrique 25 de l'ensemble 30 est montée dans la partie cylindrique 28 de la paroi de fond 16. L'extrémité amont de la partie cylindrique 25 de l'ensemble 30 vient en butée axial sur l'épaulement 29. La partie cylindrique 25 de l'ensemble 30 est fixée par brasage ou soudage à la partie cylindrique 28 du fond de chambre 16, en particulier au niveau des surfaces cylindriques 38 correspondantes (figure 6), voire également au niveau de la surface radiale annulaire formant l'épaulement 29.

Des canaux 39 sont formés dans la partie axiale cylindrique 25 du déflecteur 23, les canaux 39 étant régulièrement répartis sur la circonférence. Les canaux 39 sont séparés deux à deux par des parois de liaison 40 s'étendant axialement (figure 7). Chaque canal 39 est délimité par une surface radialement interne 41, une surface radialement externe 42 et par les surfaces des deux parois liaisons adjacentes correspondantes 40.

Les surfaces radialement interne et externe 41, 42 sont coaxiales et cylindriques, par exemple.

L'extrémité amont 43 de chaque paroi de liaison 40 peut être arrondie de manière à faciliter l'introduction de l'air de refroidissement dans les canaux 39, en limitant les pertes de charge. Le terme arrondi peut désigner une forme complexe présentant une portion arrondie, par exemple ayant une extrémité triangulaire dont le sommet est arrondi.

L'extrémité aval de chaque canal 39 débouche en regard de la partie de la base radialement interne 44 de la partie radiale du déflecteur 23 (figure 6), c'est-à-dire au niveau de la zone de liaison 44 entre la partie radiale 24 du déflecteur 23 et l'extrémité aval de la partie axiale 25. Cette zone de liaison 44 peut présenter un congé de raccordement.

Chaque canal 39 peut présenter une section dont la dimension radiale et/ou circonférentielle est comprise entre 15 et 35 mm.

L'ensemble 30 peut être réalisé en un superalliage à base de nickel et/ou de cobalt. L'ensemble 30 peut être réalisé par un procédé de fabrication additive, par exemple par fusion sélective ou par frittage sélective de poudre, à l'aide d'un faisceau d'électrons ou d'un faisceau laser.

En fonctionnement, l'air de refroidissement issu du compresseur haute pression pénètre dans les canaux 39 et impacte la base 44 de la partie radiale 24 du déflecteur 23 puis circule dans l'espace 45 ménagé axialement entre ladite partie radiale 24 et le fond de chambre 16 avant de déboucher dans la chambre de combustion 5 par l'espace 46 (figure 4) ménagé entre les rebords 37 et les viroles 11, 12.

Cet air de refroidissement permet de refroidir efficacement la partie axiale 25 de l'ensemble 30 ainsi que la base 44 de la partie radiale 24, qui sont les zones les plus critiques en termes de contraintes thermiques. On évite ainsi l'apparition de criques ou de fissure de manière à augmenter la durée de vie de l'ensemble 30.

## Revendications

1. Chambre de combustion (5) pour une turbomachine comportant une paroi de fond (16), au moins un bol mélangeur (22) destiné à favoriser le mélange d'air et de carburant, monté dans une ouverture de la paroi de fond (16), au moins un déflecteur (23) annulaire monté axialement en aval de la paroi de fond (16), par rapport au sens de circulation des gaz au sein de la chambre de combustion (5), autour de ladite ouverture, le déflecteur (23) venant de matière avec le bol mélangeur (22) de manière à former un ensemble (30) monobloc, dans laquelle ledit ensemble (30) comporte au moins un canal destiné à l'écoulement d'air de refroidissement, ledit canal (39) comportant une entrée d'air située en amont de la paroi de fond (16) et une sortie d'air située en aval de la paroi de fond (16), ladite sortie d'air étant située radialement en regard du déflecteur (23), ledit ensemble (30) comportant une partie cylindrique de fixation (25), fixée au fond de chambre (16) et montée radialement à l'intérieur de l'ouverture, **caractérisée en ce que** le déflecteur (23) comporte une partie de base radialement interne (44) reliée à ladite partie de fixation (25), le canal (39) étant ménagé dans la partie cylindrique de fixation (25), la sortie d'air du canal (39) étant située radialement en regard de la base (44) du déflecteur (23).

2. Chambre de combustion (5) selon la revendication 1, **caractérisée en ce qu'**elle comporte au moins une vrille (21a, 21b) d'admission d'air apte à générer un écoulement d'air rotatif, située en amont du bol mélangeur (22).

3. Chambre de combustion (5) selon la revendication 1 ou 2, **caractérisée en ce que** la partie de fixation (25) s'étend axialement vers l'amont depuis la périphérie radialement externe du bol mélangeur (22), le déflecteur (23) s'étendant radialement (24) vers l'extérieur depuis la périphérie radialement externe du bol mélangeur (22).

4. Chambre de combustion (5) selon l'une des revendications 1 à 3, **caractérisée en ce que** l'ensemble (30) comporte une pluralité de canaux (39) destinés à l'écoulement d'air de refroidissement, régulièrement répartis sur la circonférence.

5. Chambre de combustion (5) selon l'une des revendications 1 à 4, **caractérisée en ce que** la section de chaque canal (39) est sensiblement constante de l'extrémité amont dudit canal (39) vers l'extrémité aval dudit canal (39).

6. Chambre de combustion (5) selon l'une des revendications 1 à 4, **caractérisée en ce que** la section de chaque canal (39) diminue axialement de l'amont vers l'aval.

7. Chambre de combustion (5) selon l'une des revendications 1 à 6, **caractérisée en ce que** l'au moins un canal (39) destiné à l'écoulement d'air de refroidissement est délimité par une surface radialement interne (41) et une surface radialement externe (42), en forme de portion de cylindres ou de portions de cônes, lesdites surfaces radialement interne et externe (41, 42) étant coaxiales.

8. Chambre de combustion (5) selon la revendication 5 et selon l'une des revendications 1 à 3, 5 ou 6, **caractérisée en ce que** deux canaux adjacents (39) sont séparés circonférentiellement par une paroi de liaison (40), ladite paroi de liaison (40) comportant une extrémité amont (43) et une extrémité aval, ladite extrémité amont (43) étant arrondie.

9. Chambre de combustion (5) selon l'une des revendications 1 à 8, **caractérisée en ce que** la partie cylindrique de fixation (25) de l'ensemble (30) est fixée par brasage ou soudage à une partie cylindrique (28) de la paroi de fond (16), formée en périphérie radialement interne de l'ouverture.

## Patentansprüche

1. Brennkammer (5) für eine Turbomaschine bzw. ein Turbinentriebwerk, enthaltend eine Bodenwand (16), zumindest einen Mischbehälter (22), der dazu bestimmt ist, das Mischen von Luft und Brennstoff zu begünstigen und der in einer Öffnung der Bodenwand (16) montiert ist, und zumindest einen ringförmigen Deflektor (23), der in Bezug auf die Strömungsrichtung der Gase in der Brennkammer (5) axial stromabwärts der Bodenwand (16) um diese Öffnung herum montiert ist, wobei der Deflektor (23) stoffschlüssig mit dem Mischbehälter (22) ausgebildet ist, so dass eine einteilige Anordnung (30) gebildet ist,
wobei
die Anordnung (30) zumindest einen Kanal aufweist, der für die Kühlluftströmung bestimmt ist, wobei der Kanal (39) einen Lufteinlass aufweist, der stromaufwärts der Bodenwand (16) angeordnet ist, und einen Luftauslass, der stromabwärts der Bodenwand (16) angeordnet ist, wobei der Luftauslass radial gegenüber dem Deflektor (23) angeordnet ist, wobei die Anordnung (30) einen zylindrischen Befestigungsabschnitt (25) aufweist, der am Kammerboden (16) befestigt und radial im Inneren der Öffnung montiert ist,
**dadurch gekennzeichnet, dass**
der Deflektor (23) einen radial inneren Basisabschnitt (44) aufweist, der mit dem Befestigungsabschnitt (25) verbunden ist, wobei der Kanal (39) in dem zylindrischen Befestigungsabschnitt (25) ausgebildet ist, wobei der Luftauslass des Kanals (39) radial gegenüber der Basis (44) des Deflektors (23) angeordnet ist.

2. Brennkammer (5) nach Anspruch 1,
**dadurch gekennzeichnet, dass**
sie zumindest eine Lufteinlassschnecke (21a, 21b) enthält, die dazu geeignet ist, eine rotierende Luftströmung zu erzeugen, und die sich stromaufwärts des Mischbehälters (22) befindet.

3. Brennkammer (5) nach Anspruch 1 oder 2,
**dadurch gekennzeichnet, dass**
der Befestigungsabschnitt (25) sich axial stromaufwärts vom radial äußeren Umfang des Mischbehälters (22) ausgehend erstreckt, wobei sich der Deflektor (23) radial (24) nach außen vom radial äußeren Umfang des Mischbehälters (22) ausgehend erstreckt.

4. Brennkammer (5) nach einem der Ansprüche 1 bis 3,
**dadurch gekennzeichnet, dass**
die Anordnung (30) eine Vielzahl von Kanälen (39) für die Kühlluftströmung aufweist, die gleichmäßig über den Umfang verteilt sind.

5. Brennkammer (5) nach einem der Ansprüche 1 bis 4,
**dadurch gekennzeichnet, dass**
der Querschnitt jedes Kanals (39) vom stromaufwärtigen Ende des Kanals (39) bis zum stromabwärtigen Ende des Kanals (39) im Wesentlichen konstant ist.

6. Brennkammer (5) nach einem der Ansprüche 1 bis 4,
**dadurch gekennzeichnet, dass**
der Querschnitt jedes Kanals (39) axial von stromaufwärts nach stromabwärts abnimmt.

7. Brennkammer (5) nach einem der Ansprüche 1 bis 6,
**dadurch gekennzeichnet, dass**
der zumindest eine Kanal (39), der für die Kühlluftströmung vorgesehen ist, durch eine radial innere Fläche (41) und durch eine radial äußere Fläche (42) in Form von Zylinderabschnitten oder Konusabschnitten begrenzt ist, wobei die radial innere und die radial äußere Fläche (41, 42) koaxial verlaufen.

8. Brennkammer (5) nach Anspruch 5 und nach einem der Ansprüche 1 bis 3, 5 oder 6,
**dadurch gekennzeichnet, dass**
zwei benachbarte Kanäle (39) in Umfangsrichtung durch eine Verbindungswand (40) getrennt sind, wobei die Verbindungswand (40) ein stromaufwärtiges Ende (43) und ein stromabwärtiges Ende enthält, wobei das stromaufwärtige Ende (43) abgerundet ist.

9. Brennkammer (5) nach einem der Ansprüche 1 bis 8,
**dadurch gekennzeichnet, dass**
der zylindrische Befestigungsabschnitt (25) der Anordnung (30) durch Verlöten oder Verschweißen an einem zylindrischen Abschnitt (28) der Bodenwand (16) befestigt ist, der am radial inneren Umfang der Öffnung ausgebildet ist.

## Claims

1. A combustion chamber (5) for a turbomachine having a bottom wall (16), at least one mixing bowl (22) for promoting the mixing of air and fuel, mounted in an opening in the bottom wall (16), at least one annular baffle (23) mounted axially downstream of the bottom wall (16), with respect to the direction of the gas flow within the combustion chamber (5), around said opening, the baffle (23) being produced in one piece with the mixing bowl (22) so as to form a one-piece assembly (30), wherein said assembly (30) comprises at least one channel for the flow of cooling air, said channel (39) comprising an air inlet located upstream of the bottom wall (16) and an air outlet located downstream of the bottom wall (16), said air outlet being located radially opposite the baffle (23), said assembly (30) comprising a cylindrical attachment part (25), attached to the chamber bottom (16) and mounted radially inside the opening, **characterized in that** the baffle (23) comprises a radially inner base part (44) connected to said attachment part (25), the channel (39) being provided in the cylindrical attachment part (25), the air outlet of the channel (39) being located radially opposite the base (44) of the baffle (23).

2. A combustion chamber (5) according to claim 1, **characterized in that** it comprises at least one air intake swirler (21a, 21b) capable of generating a rotary air flow, located upstream of the mixing bowl (22).

3. A combustion chamber (5) according to claim 1 or 2, **characterized in that** the attachment part (25) extends axially in the upstream direction from the radially outer periphery of the mixing bowl (22), the baffle (23) extending radially (24) outwardly from the radially outer periphery of the mixing bowl (22).

4. A combustion chamber (5) according to one of claims 1 to 3, **characterized in that** the assembly (30) comprises a plurality of channels (39) intended for the flow of cooling air, evenly distributed over the circumference.

5. A combustion chamber (5) according to one of claims 1 to 4, **characterized in that** the cross-section of each channel (39) is substantially constant from the upstream end of said channel (39) to the downstream end of said channel (39).

6. A combustion chamber (5) according to one of claims 1 to 4, **characterized in that** the cross-section of each channel (39) axially decreases in the downstream direction.

7. A combustion chamber (5) according to one of claims 1 to 6, **characterized in that** the at least one channel (39) for the flow of cooling air is delimited by a radially inner surface (41) and a radially outer surface (42), in the form of a cylinder portion or cone portions, said radially inner and outer surfaces (41, 42) being coaxial.

8. A combustion chamber (5) according to claim 5 and according to one of claims 1 to 3, 5 or 6, **characterized in that** two adjacent channels (39) are circumferentially separated by a connecting wall (40), said connecting wall (40) having an upstream end (43) and a downstream end, said upstream end (43) being rounded.

9. A combustion chamber (5) according to one of claims 1 to 8, **characterized in that** the cylindrical attachment part (25) of the assembly (30) is attached by brazing or welding to a cylindrical part (28) of the bottom wall (16), formed in the radially inner periphery of the opening.
